# EUROPÄISCHE PATENTSCHRIFT

(11) **EP 1 951 631 B1**
(45) Veröffentlichungstag und Bekanntmachung des Hinweises auf die Patenterteilung: **11.11.2009**
(21) Anmeldenummer: 06818812.7
(22) Anmeldetag: 24.11.2006
(51) Int. Cl.: C03B 9/38

(54) **MÜNDUNGSKÜHLUNG FÜR BEHÄLTERGLASMASCHINEN SOWIE VERFAHREN ZUR KÜHLUNG DER MÜNDUNG EINES GLASBEHÄLTERS BEI DER VORFORMUNG IN EINER BEHÄLTERGLASMACHINE**
FINISH COOLING UNIT FOR CONTAINER GLASS MACHINES AND METHOD FOR COOLING THE FINISH OF A GLASS CONTAINER DURING PARISON MOLDING IN A CONTAINER GLASS MACHINE
REFROIDISSEMENT D'ORIFICE DANS DES MACHINES A VERRE POUR RECIPIENT ET PROCEDE POUR REFROIDIR L'ORIFICE D'UN RECIPIENT EN VERRE LORS DU PREFORMAGE DANS UNE MACHINE A VERRE POUR RECIPIENT

(30) Priorität: 25.11.2005 DE 102005056600; 15.06.2006 DE 102006028122
(43) Veröffentlichungstag der Anmeldung: 06.08.2008
(73) Patentinhaber: Gerresheimer Glas GmbH, 40213 Düsseldorf (DE)
(72) Erfinder: KAMMERER, Ralf, 77866 Rheinau (DE)
(74) Vertreter: Kiani, Nassim
(86) Internationale Anmeldenummer: PCT/EP2006/011297
(87) Internationale Veröffentlichungsnummer: WO 2007/059994

(56) Entgegenhaltungen:
- EP-A- 1 149 806
- EP-A- 1 473 281
- DE-A1- 19 838 698
- DE-C1- 3 040 356
- DE-C1- 4 118 682
- US-A- 3 024 571
- US-A- 3 094 404
- US-A- 3 838 997
- MANN PHILIP A: "NECK RING COOLING" GLASS (REDHILL), FUEL AND METALLURGICAL JOURNALS, REDHILL,, GB, Bd. 72, Nr. 1, Januar 1995 (1995-01), Seiten 23-25, XP009078368 ISSN: 0017-0984

## Beschreibung

Die vorliegende Erfindung betrifft eine Vorrichtung zur Mündungskühlung für eine Behälterglasmaschine.

Im Bereich der maschinellen Behälterglaserzeugung wird aus der Glasschmelze im Ofen über einen Feeder ein Tropfen geschnitten und über ein Rinnensystem einer Vorform zugeführt, in der entsprechend Gewicht und später endgültig angestrebter Flaschenform ein Vollkörper mit einer gewissen Höhlung geformt wird. Dies geschieht i.d.R. dadurch, daß der Tropfen aus der Glasschmelze zunächst über das oben genannte Rinnensystem in die Vorform hinein rutscht, dann von oben gegen die Formwandung nach unten hin festgeblasen wird, worauf durch Vorblasen von unten her eine Höhlung in den Trofenvollkörper eingeblasen wird, wodurch sich im unteren Bereich der Vorform bereits ein oberer Bereich des späteren Glasbehälters, nämlich eine Mündung des späteren Glasbehälters ausbildet. Dieses Verfahren wird als Blas-Blasverfahren ('blow and blow') bezeichnet. Ferner existiert auch ein Preß- und Blas-Verfahren ('press and blow'); dort wird von unten her ein Flaschenkörper zuerst vorgeblasen und später über einen Stempel vorgepreßt Im Falle beider vorgenannter Verfahren wird hiernach der so vorgeformte noch unfertige, aber bereits eine begonnene Innenhöhlung aufweisende Glasbehälter von der Vorform zur Fertigform verbracht, was etwa dadurch geschehen kann, daß ein Schwenkarm, der einen den Glasbehälter im Bereich seiner Mündung greifenden Mündungsträger aufweist, den vorgeformten Glaskörper aus der sich zu diesem Zweck öffnenden Vorform in eine sich ebenfalls zu diesem Zwecke öffnende Fertigform verbringt, wobei der Glasbehälter um 180° um seine horizontale Achse gedreht wird und so die Mündung in der Fertigform nunmehr nach oben zeigt. In der Fertigform wird dieser Glaskörper sodann - ggf. nach Wiedererhitzung - durch Einblasen in die Mündung - nun von oben - in die endgültige Form fertiggeblasen, worauf er nach Öffnen der Fertigform entnommen werden kann (vgl. hierzu etwa schon Lueger/Matthée Lexikon der Fertigungstechnik, 4. Aufl., Stuttgart 1967, Bd. 8, S. 370, wobei diese Fundstelle aus der Literatur hiermit durch Inbezugnahme ausdrücklich mit in den Offenbarungsgehalt der Schrift hier aufgenommen wird).

Hierbei ist eine Kühlung, sowohl der Vorform selbst, aber auch im Bereich der Mündung des Glasbehälters, wo der Mündungsträger mit der Mündungsform angreift, vonnöten.

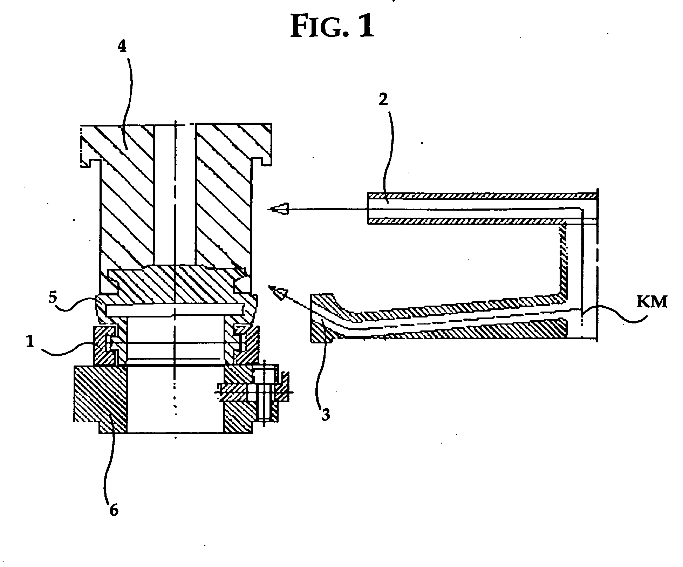

Üblicherweise geschieht dies dadurch, daß man mit einer eigens hierfür vorgesehenen Düse oder Düsen den Mündungsbereich und die Vorform mit einem Kühlmedium, etwa Kühlluft, umströmt. Eine solche Vorrichtung nach dem Stand der Technik kann etwa der beigefügten **Fig. 1** entnommen werden. Wegen der Einzelheiten sei auf die später nachfolgende Figurenbeschreibung verwiesen.

Nach diesem Stand der Technik ergibt sich nun das Problem, daß der Bereich der Mündung mit der Vorform und damit keinesfalls stärker als diese gekühlt wird, was aber zur Steigerung des Maschinendurchsatzes angezeigt wäre, da ja im Augenblick des Transportes des vorgeformten Glasbehälters von der Vorform zur Fertigform der Bereich der Glasbehältermündung, in der der Mündungsträger die Flasche angreift, um sie zur Fertigform zu verbringen, bereits soweit abgekühlt sein muß, daß er genügend Stabilität aufweist, um eine unerwünschte Verformung des Glasbehälters während der Verbringung, bei der ja Kräfte angreifen, nicht mehr zuzulassen.

Derartige Vorformkühlungen wurden im Stand der Technik versucht zu verbessern:

So wird in der DE 32 39 095 C2 eine Vorrichtung beschrieben, die es erlaubt, den sich im Forminnenraum ausdehnenden Glaskörper durch unterschiedlich starke Temperaturbeeinflussung über seine Höhe mit unterschiedlichen Wanddicken zu gestalten. Eine Vorformkühlung mit ähnlichen technischen Zielen lehrt auch bereits die DE 25 37 037, die jedes gewünschte Temperaturprofil an der dem Glas zugewandten Fläche des Formwerkzeuges einstellen und einhalten können will.

Diese Weiterentwicklungen verbessern somit in Spezialanwendungsfällen möglicherweise die Vorformkühlung selbst, tragen aber nichts zur Lösung des eingangs genannten Problems bei.

Auch sind einer Abhilfe durch Erhöhung der Kühlleistung hier Grenzen gesetzt, da dies (s.o.) - insbesondere bei gleichem Kühlluftdruck - auch immer zu einer unerwünscht starken Abkühlung der Vorform führt. Eine geringere Maschinenleistung aufgrund zu geringer Mündungskühlleistung wäre daher die Folge.

Im Stand der Technik ist desweiteren festzustellen, daß nicht allein die Vorformkühlung, sondern auch die Mündungskühlung Gegenstand von verschiedentlichen Verbesserungsversuchen war:

So zeigt die EP 0 443 949 B1 (entspricht der deutschsprachigen Schrift DE 691 04 513 T2) eine zusätzlich zur Vorformkühlung vorgesehene Mündungskühlung, ohne jedoch genauere Anordnungen für ihre Betriebsweise zu treffen; insbesondere gibt diese Schrift, die lediglich einen mechanischen Aufbau beschreibt, keine Auskunft über etwaige Steuer- oder Regelungsmittel für die beiden Kühlungen (Vorformkühlung einerseits und Mündungskühlung andererseits). Weiterhin ist die Kühlwirkung bei der in dieser Schrift vorgestellten Mündungskühlung nicht optimal, da die Wärme hier lediglich über ein von außen her erfolgendes Anblasen des Mündungsbereiches abgeführt wird. Darüber hinaus weist die Vorrichtung den Nachteil auf, daß sich die dort vorgesehenen Kanäle für das Kühlmedium immer mit den sich öffnenden und schließenden Vorformhälften mit bewegen und so starkem Verschleiß ausgesetzt sind, was infolge dessen auch zu einer hohen Wartungsanfälligkeit der Vorrichtung führt und ihre Praxistauglichkeit für die Massenproduktion empfindlich schmälert, wenn nicht gar völlig infrage stellt.

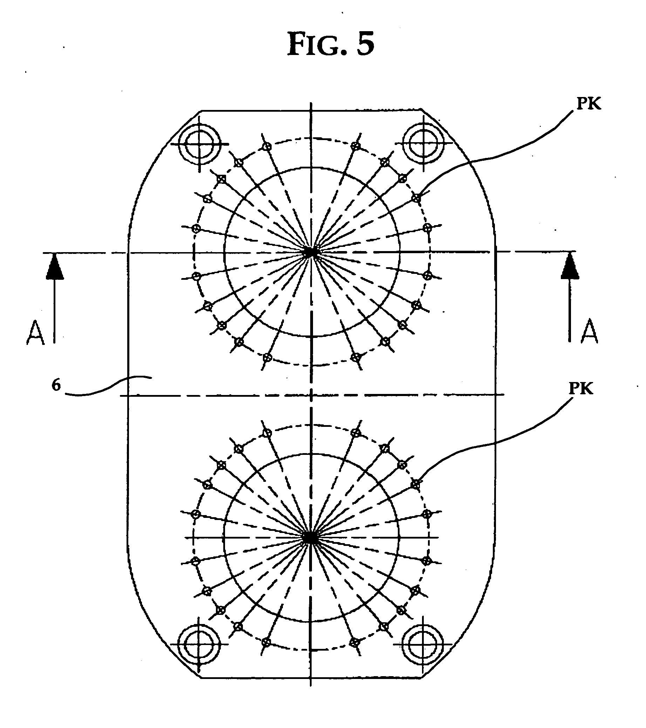

Ähnliche Probleme weist die aus der DE 36 37 552 C1 bekannte Kühlvorrichtung auf, welche lediglich eine Mündungskühlung betrifft, die jedoch das Kühlmedium über den Mündungsträger und das Mündungswerkzeug (auch Mündungsform genannt) - mithin ebenfalls über bewegliche und entsprechend verschleißintensive Teile - zuführt. Auch diese Schrift gibt keine Auskunft über etwaige Steuer- oder Regelungsmittel oder Verfahren für die Kühlung (hier die Mündungskühlung); insbesondere gibt sie keine Auskunft über das etwaige Verhältnis der Mündungskühlung zur Vorformkühlung, die in diesem Dokument selbst gar nicht beschrieben wird. Aufgrund der Tatsache jedoch, daß Glasmaschinen nach dem Stand der Technik stets mit einem einheitlichen Stationsdruck für Kühlluft betrieben werden, ist jedoch klar, daß die hier gezeigte Mündungskühlung nicht unabhängig von der Vorformkühlung gesteuert oder geregelt werden kann. Es wird lediglich näher ausgeführt, daß hier die Mündungskühlung nach bzw. beim Öffnen der Vorformhälften durch sich hierbei öffnende Kanalaustritte zur zusätzlichen Kühlung des Flaschenhalsbereiches verwendet werden kann (vgl. Fig. 5 und die hierzu gehörige Beschreibung). Die Kühlwirkung ist auch im Falle dieser Vorrichtung nicht optimal, da die Wärme im eigentlichen Mündungsbereich nur über den Massekontakt von Mündung zu Mündungswerkzeug und schließlich zum Kühlmedium abgeführt wird. Lediglich der Halsbereich oberhalb der Mündung kann zusätzlich noch von außen während des Öffnens der Vorform angeblasen werden.

Demgegenüber wählt die DE 41 18 682 C1 eine bereits verbesserte Lösung dergestalt, daß hier eine Zufuhr des Kühlmediums zur Mündungskühlung gewählt wird, deren Hauptbestandteile jedenfalls im Betrieb der Glasmaschine selbst nicht mehr bewegt werden. Gleichwohl erfolgt die Kühlmedienzufuhr auch hier noch in konstruktiv aufwendiger Weise von der Seite her zum Mündungswerkzeug hin, welches selbst Kühlkanäle aufweist, die mit ihrem seitlichen Einlaß fluchtend mit den Zufuhrkanälen eingestellt werden müssen, damit diese, jedenfalls in der mit der Vorform korrespondierenden Betriebsstellung des Mündungsträgers, das Kühlmedium von der Seite her aus dem Zufuhrkanal her aufnehmen können. Hierzu weist die Vorrichtung daher Feinjustagemittel auf, mittels derer die Zuführkanäle höhenverstellbar und damit an die (End)-Position des Mündungsträgers anpassbar sind, was mit erheblichem Konstruktions- und Einrüstaufwand und somit entsprechenden Investitions- und Betriebskosten verbunden ist. Auch ist die Kühlwirkung bei der in dieser Schrift vorgestellten Mündungskühlung ebenfalls nicht optimal, da die Abfuhr der Wärme auch in diesem Falle lediglich über den Massekontakt von Mündung zu Mündungswerkzeug und dann zum Kühlmedium stattfindet.

Den vorgenannten Nachteil der nötigen Feinjustage bei seitlicher Heranführung des Kühlmediums vermeidet die Vorrichtung nach der DE 100 20 431 B4, die - ähnlich wie die EP 0 443 949 B1 - den Mündungsbereich einfach von außen mit dem Kühlmedium aus einem gewissen Abstand anbläst. Damit erkauft sich diese Vorrichtung, um den Vorteil der Verschleißunanfälligkeit, den Nachteil der schlechteren Kühlwirkung an der Mündung, was aber auch nicht ihr Ziel ist, will sie doch lediglich den mündungsseitigen Vorformbereich (meist den Flaschenhals) besser kühlen. Diese Schrift gibt zwar ganz allgemein Auskunft darüber, daß die Kühlmedienzufuhrventile der Regelung dienen sollen, jedoch fehlen auch hier wiederum genauere Angaben hierzu. So sagt sie nichts dazu, für welche Kühlprozessparameter denn welche Steuer- oder Regelungsmittel für die beiden Kühlungen (Vorformkühlung einerseits und Mündungskühlung andererseits) vorgesehen sein sollen. Auch hier ist somit von einer gemeinsamen Quelle mit gemeinsamen Stationsdruck für das Kühlmedium auszugehen.

Im Falle der WO 2006/019964 A1 stammt die Kühlluft für Vorform und Mündung ebenfalls aus einer gemeinsamen Quelle. Somit ist es bei ihr auch nicht möglich, den Druck des Kühlmediums für die Mündungskühlung tatsächlich unabhängig von demjenigen für die Vorformkühlung zu regeln oder zu steuern, da ja beide Kühlmedien aus einer gemeinsamen Quelle stammen, wie schon die dortigen Angaben zum Betriebsdruck von etwa 2 bis 3 psi, also etwa 0,14 bis 0,21 bar, zeigen. Ein derartiger. Druck ist typisch für den von einem Gebläse erzeugten Stationsdruck, der auch für die Vorformkühlung verwendet wird, er ist jedoch ungeeignet für eine wirklich unabhängige Mündungskühlung. Daher ist es nach der Lehre der WO 2006/019964 A1 insbesondere auch nicht möglich, die Mündungskühlung so zu steuern oder zu regeln, daß die Mündungskühlung ohne übermäßigen Wärmeentzug an der Vorform erfolgt. Im Hinblick auf bevorzugte Ausführungsformen nach der hier vorliegenden Erfindung ist festzuhalten, daß nach der WO 2006/019964 A1 weder die Zuleitung der Kühlluft über den Pegelzylinder erfolgt, noch dieser einen Kühlluftkanal aufweist, durch den die Kühlluft wieder hinaustritt. Vielmehr geschieht hier die Zuleitung der Kühlluft über die neben dem Pegelzylinderdeckel angeordnete Stationsbox und tritt wieder durch eine Bohrung in einer Abdeckplatte nach oben aus, was bei einem Produktwechsel aufwendige Umbauten notwendig macht.

Damit zeigt der Stand der Technik keine Lösungen, die eine möglichst wirkungsvolle Mündungskühlung zeigen, welche die Vorformkühlung nicht beeinträchtigt, aber zugleich auch verschleiß-, einstell- und somit wartungsarm ist.

Lediglich im Bereich der reinen Vorformkühlung sind dem Stand der Technik Lösungen zu entnehmen, die das Problem der verscheiß- und damit wartungsarmen Zufuhr des Kühlmediums betreffen:

So zeigt etwa die DE 198 19 489 C2 eine solche Kühlvorrichtung allein für die Vorform, die dieses Problem mittels Schiebeplatten mit darin eingelassenen Öffnungen angeht, die in korrepondierender Stellung dann einen Durchlaßkanal für das Kühlmedium der Vorform bilden.

Die DE 198 38 698 A1 wiederum zeigt eine Vorrichtung zur Kühlung, bei der Vorformkühlung und Mündungskühlung gemeinsam mittels eines zusammenhängenden Kühlkreislaufs ausgeführt sind, der durch den Pegelzylinderdeckel versorgt wird. Hierdurch wird zwar das Problem der konstruktiv aufwendigen und verschleißanfälligen oder justageintensiven Zufuhr des Kühlmediums über bewegliche und/oder zu justierende Teile gelöst und wohl auch die Kühlwirkung verbessert, eine gegenüber der Vorformkühlung stärkere und damit die Leistung der Glasmaschine steigernde Mündungskühlung wird hierdurch jedoch nicht erreicht. Im Gegenteil: Es ist nach der DE 198 38 698 A1 gerade Ziel der dortigen Anordnung eine gleichförmige Kühlung sowohl der Vorform, als auch der Mündungsform zu erreichen (vgl. Sp. 1, Z. vorletzte Zeile bis Sp. 2, Z. 2 der DE 198 38 698 A1), was durch den dort gezeigten gemeinsamen Kühlkreislauf von Vorform- und Mündunsgkühlung angestrebt wird.

Die EP 0 187 325 A2 zeigt eine Vorrichtung zur Mündungskühlung für eine Behälterglasmaschine zur Formung eines Glasbehälters mit Pegelzylinder und Pegelzylinderdeckel und einer Vorform, wobei der Pegelzylinderdeckel eine Zuleitung und einen Kanal mit einem Austritt aufweist, wodurch ein Kühlmedium geführt wird, das wieder aus dem Kanal im Pegelzylinderdekkel zur Mündungskühlung hinaus tritt. Jedoch wird auch hier die zur Mündungskühlung verwendete Kühlluft auch zur Vorformkühlung verwendet, was damit auch in diesem Falle gerade eben keine von der Vorformkühlung unabhängige Mündungskühlung darstellt. Darüber hinaus weist die EP 0 187 325 A2 jedoch noch einen weiteren wesentlichen Nachteil auf: Die Kühlluft wird hier nämlich durch den Deckring geführt, was die Gefahr von Undichtigkeiten birgt und damit zu einem Eindringen von Kühlluft in den Innenraum führen kann. Geschieht dies aber, so bilden sich Mündungsrisse und/oder Luftbläschen an dem zu fertigenden Glasbehälter, was wiederum zu Dichtigkeitsproblemen des Glasbehälters selbst führt; er leidet dann an einem erheblichen Qualitätsmangel und ist somit letztlich nicht zu veräußern und damit für den Hersteller unbrauchbar.

Es ist daher Aufgabe der vorliegenden Erfindung, eine Mündungskühlung für Behälterglasmaschinen anzugeben, die eine möglichst wirkungsvolle Mündungskühlung erlaubt, ohne die Vorformkühlung durch eine zu starke Wirkung zu beeinträchtigen, aber zugleich auch verschleiß-, einstell- und somit wartungsarm ist.

Diese Aufgabe wird durch eine Vorrichtung mit den Merkmalen des Patentanspruchs 1 gelöst. Weitere vorteilhafte Ausführungsformen der erfindungsgemäßen Vorrichtung ergeben sich aus den Unteransprüchen.

Die erfindungsgemäße Vorrichtung ermöglicht so eine besonders einfache Zuleitung des Kühlmediums, ohne, daß aufwendige Umbauarbeiten bei Produktwechsel notwendig wären, wie es etwa im Falle der Zuleitung des Kühlmediums über die neben dem Pegelzylinderdeckel angeordnete Stationsbox der Fall ist; ein Weg, den etwa die WO 2006/019964 A1 wählt (siehe auch oben).

Allgemein kann die erfindungsgemäße Lösung wie folgt beschrieben werden:

Ein Kühlmedium, vorzugsweise Kühlluft, gelangt über einen Pegelzylinder in einen Pegelzylinderdeckel. Dort wird das Kühlmedium über eine Zuleitung, vorzugsweise eine ringförmige Zuleitung oder zwei halbringförmige oder mehrere kreissegmentformige Zuleitungen, - etwa am Boden oder in mittlerer Höhe des Pegelzylinderdeckels eingelassen - über Kanäle, etwa ringsum in den Pegelzylinder eingebrachte, vorzugsweise gleichmäßig bogenförmig über den Kreisumfang der Pegelzylinderaufsicht gesehen, verteilt eingebrachte (vorzugsweise etwa parallel zur Zylinderwandung verlaufende vertikale) Kanäle, wie etwa Löcher, besonders bevorzugterweise 22 oder 24 Kanäle, etwa Löcher, pro Mündung, geführt. Diese Kanäle im Pegelzylinderdeckel sind dabei vorzugsweise so ausgeführt, daß an ihrem Austritt aus dem Pegelzylinderdeckel (vorzugsweise an dessen Oberkante, besonders bevorzugterweise dort vertikal austretend) eine Erhöhung der Strömungsgeschwindigkeit des Kühlmediums erzeugt wird, was etwa dadurch geschehen kann, daß hier ein gegenüber dem Innenmaß des Kanals/der Kanäle jeweils verkleinerte Austrittsöffnung vorgesehen ist; etwa durch Querschnittsverkleinerung seiner Austrittsöffnung Diese Geschwindigkeitserhöhung des Kühlmediumstromes an der Austrittsöffnung des jeweiligen Kanals erzeugt im Pegelzylinderdeckel-Innenbereich einen Unterdruck, da zwischen der Oberkante von Pegelzylinderdeckel und der Unterkante des Mündungsträgers und/oder des Mündungswerkzeugs ein Schlitz oder auch Spalt (etwa vorzugsweise mit einer Breite von ca. 4/10 bis 6/10-tel mm) vorgesehen ist und so eine Verbindung von dem Pegelzylinderdeckel-Innenbereich nach Außen besteht. Durch den so erzeugten Unterdruck findet nun eine Entlüftung im Pegelzylinderdeckel-Innenbereich durch den vorerwähnten Schlitz oder Spalt statt; dieser Entlüftungseffekt stellt einen vorzugsweise gewünschten, der Produktionsgeschwindigkeitsteigerung hilfreichen Zusatzeffekt der vorliegenden Erfindung dar, weil sich im inneren Bereich des Pegelzylinderdekkels andere Werkzeuge nach oben und unten bewegen und deswegen für eine optimale Abluft gesorgt werden muß, um etwaigen Staudruckeffekten durch eine Kolbenwirkung durch diese Werkzeuge entgegezusteuern. Die aus dem Pegelzylinderdeckel - durch etwaige dortige Bohrungen, Schlitze oder dergleichen - austretende Luft kühlt die Mündung in axialer Richtung - vorzugsweise in etwa axialer Richtung - (,vertical flow' oder auch in Kurzform ,vertiflow').

Dies ermöglicht es, unabhängig von der Vorformkühlung, die man wegen des im weiteren anstehenden Fertigblasens des Glasbehälters in der Fertigform ja nicht zu intensiv betreiben will, um ihn dort nicht wieder unnötig stark erhitzen zu müssen, eine Mündungskühlung zu betreiben. Insbesondere können die hierfür nötigen Drücke, Volumenströme oder Temperaturen des Kühlmediums, vorzugsweise der Kühlluft unabhängig von denen der Vorformkühlung eingestellt werden.

Um eine solche unabhängige Regelung etwa des Druckes oder Volumenstromes vornehmen zu können, ist es etwa möglich, daß die Kühlkreise für Vorform und Mündung aus separaten Quellen für das Kühlmedium gespeist werden, die jeweils einen hierzu ausreichenden Druck am Vorlauf des Regelventils sicherstellen.

Es ist aber auch möglich, sie aus einer gemeinsamen Quelle zu speisen, sofern sichergestellt ist, daß die beiden Regelventile jeweils immer über eine ausreichende Ventilautorität verfügen insbesondere auch dann, wenn das jeweils andere Ventil vollständig geöffnet ist. Will man somit Druck oder Volumenstrom des Kühlmediums für die Mündungskühlung unabhängig von der Vorformkühlung und bei gemeinsamer Kühlmediumquelle regeln, so muß das Regelventil für die Mündungskühlung auch bei vollständig geöffnetem Vorformkühlungsventil noch über eine zur Regelung ausreichende Ventilautorität verfügen. Unter Ventilautorität wird dabei das Verhältnis der Druckdifferenz über einem vollständig geöffneten Regelventil zur Druckdifferenz des gesamten hydraulischen - hier pneumatischen - Systems, einschließlich des Regelventils selbst verstanden (vgl. DIN ISO 16484 Teil 2, Ziff. 3.197, Oktober 2004). Welche Ventilautorität dabei erforderlich ist, hängt von den Verhältnissen im Einzelfall ab, jedoch wird üblicherweise eine Ventilautorität von mehr als 0,5 für ein technisch brauchbares Regelverhalten empfohlen (vgl. etwa Siemens Werkveröffentlichung, Siemens Building Technologies Landis & Staefa Division, Steinhausen, Schweiz, 1997).

Es können aber nicht nur die für die Mündungskühlung nötigen Drücke, Volumenströme oder Temperaturen des Kühlmediums unabhängig von denen der Vorformkühlung geregelt werden. Vielmehr gilt dies ebenso für etwaige andere infrage kommende Parameter. So kann auch die Temperatur an der Mündung selbst gemessen und als zu regelnde Größe verwendet werden. Eine solche Messung kann etwa berührungslos - wie etwa durch Infrarot-Thermometer - (vgl. z.B. Geräte der Newport Electronics GmbH in Deutschland, z.B. Baureihe OS523 und OS 524 mit einem Temperaturspektrum von -18°C bis 2482°C) - erfolgen, etwa von unten her durch den Pegelzylinder- und/oder Pegelzylinderdeckel-Innenbereich hindurch. Aber auch eine Temperaturmesszelle in oder im Bereich des Mündungswerkzeugs (auch Mündungsform genannt) oder des Mündungsträgers kann hierzu dienen, wobei hier ggf. geeignete Wärmeleiter Verwendung finden, um definierte Temperaturmessungen zu erhalten.

Auch kann insbesondere zumindest ein von der Vorformkühlung getrennter Regelkreis hierfür jeweils oder auch die Regelung der Parameter kombinierend eingerichtet werden.

In einer bevorzugten Ausführungsform der vorliegenden Erfindung wird der Strom des Kühlmediums in seinem weiteren Verlauf - etwa durch jeweils einen weiteren Kanal, vorzugsweise jeweils ein weiteres Loch, nun im Mündungsträger und/oder Mündungswerkzeug - auch von außen in Höhe des Mündungsbereiches des Glasbehälters mit seiner immer noch hohen Geschwindigkeit vorbeigeleitet. Hierzu ist es vorteilhaft, den Austritt des jeweiligen Kanals im Pegelzylinderdeckel unterhalb des Eintritts eines jeweilig hierzu gehörigen Kanals im Mündungsträger und/oder Mündungswerkzeug vorzusehen; dies jedenfalls in der entsprechenden (End-)Position des Mündungsträgers und/oder und/oder Mündungswerkzeugs an der Vorform. Da auch hier wiederum zumindest eine Öffnung (etwa Entlüftungsbohrung[en]) zwischen der Oberkante des Mündungsträgers und der Unterkante der Vorform vorgesehen sein kann oder können (etwa vorzugsweise mit einem Bohrungsquerschnitt von ca. 3 bis 10 mm) und der immer noch schnelle Strom des Kühlmediums an deren Außenöffnung vorbeifließt, wird auch hierdurch nun im Innenbereich der Glasbehältermündung ein zusätzlicher Unterdruck erzeugt, was einen weiteren Entlüftungsstrom aus diesem Bereich heraus erzeugt, der solchermaßen den Mündungsinnenbereich zusätzlich kühlt und so die erfindungsgemäße Mündungskühlung weiter verbessert. Dabei kann auch eine weitere Geschwindigkeitserhöhung des Volumenstromes - etwa im Bereich des Austritts des jeweils weiter vorgesehenen Kanals durch den Mündungsträger und/oder das Mündungswerkzeug hindurch - vorzugsweise durch die hier dargestellten Mittel, wie etwa eine weitere Düse, vorgesehen sein.

In einer weiteren besonders bevorzugten Ausführungsform der vorliegenden Erfindung wird zur Geschwindigkeitserhöhung des Kühlmediumstromes an der Oberkante des Pegelzylinderdeckels (jeweils) eine Düse verwendet, deren Wandung im Querschnitt besonders bevorzugterweise ballig ausgebildet ist, um eine besonders starke Erhöhung der Strömungsgeschwindigkeit des Kühlmediums an der Austrittsöffnung zu erreichen. Dies ist deshalb besonders vorteilhaft, weil bei solch hohen Strömungsgeschwindigkeiten der Volumenstrom fast nur nach oben in Düsenaustrittsrichtung und nicht etwa in Richtung des sich ja auch noch weiter nach außen fortsetzenden bereits erwähnten ersten Schlitzes oder Spaltes zwischen Oberkante Pegelzylinderdeckel und Mündungsträger fließt, um dort auszutreten. Diese Ausführungsform der vorliegenden Erfindung ist daher auch besonders vorteilhafterweise mit der unmittelbar zuvor erwähnten Ausführungsform zu kombinieren, die auf eine zielgerichtete Weiterleitung des Volumenstromes in den Kanal durch den Mündungsträger und/oder das Mündungswerkzeug hindurch angewiesen ist, welcher bzw. welches - jedenfalls in der mit der Vorform korrespondierenden Betriebsstellung des Mündungsträgers und/oder des Mündungswerkzeugs - oberhalb des Pegelzylinderdeckels angeordnet ist.

Nicht unerwähnt bleiben soll, daß auch jede weitere nach der vorliegenden Erfindung vorgesehene Düse, insbesondere auch solche etwa im Bereich des Austritts des jeweils weiter vorgesehenen Kanals durch den Mündungsträger und/oder das Mündungswerkzeug hindurch die vorstehend beschriebene ballig ausgeformte Wandung aufweisen kann.

Ausdrücklich bezieht sich die vorliegende Erfindung neben der Mündungskühlung für eine Behälterglasmaschine und die entsprechend ausgestattete Behälterglasmaschine auch auf die entsprechenden Pegelzylinderdeckel, Mündungsträger und/oder Mündungswerkzeugkonstruktion (mit etwaigen Bohrungen und/oder Kühlöffnungen, vorzugsweise Schlitzen oder Spalten) oder etwaige weitere hier offenbarte Vorrichtungen der hier vorgestellten erfindungsgemäßen Mündungskühlung für Behälterglasmaschinen und der erfindungsgemäßen Pegelzylinderdeckel, Mündungsträger und/oder Mündungswerkzeugkonstruktion (mit etwaigen Bohrungen und/oder Kühlöffnungen, vorzugsweise Schlitzen oder Spalten) sowie etwaiger weiterer hier offenbarter Vorrichtungen. Insbesondere kann auch die Kanaldurchführung durch Mündungsträger und insbesondere auch durch Mündungswerkzeug erfindungsgemäß auch unabhängig von einer Zuleitung durch den Pegelzylinder und/oder Pegelzylinderdeckel, etwa über eine anderweitige Zuleitung, z.B. über die Stationsbox, erfolgen. Gleiches gilt insbesondere auch für die Unterdruck-Entlüftungskosntruktionen vermittels des Schlitzes oder Spaltes zwischen der Oberkante des Pegelzylinderdeckels und der Unterkante des Mündungsträgers sowie der Entlüftung des Mündungsinnenbereiches vermittels einer Öffnung zum Mündungsinnenbereich hin zwischen der Oberkante des Mündungsträgers und der Unterkante der Vorform.

Mit Hilfe der vorliegenden Erfindung gelingt es nun - jeweils in entsprechend angeordneter Ausführungsform -
- die Parameter (etwa Druck, Volumenstrom, Temperatur) dieser Kühlung von der Vorformkühlung separat so zu steuern oder zu regeln, daß eine - vorzugsweise auch kräftige - Mündungskühlung ohne übermäßigen Wärmeentzug an der (gesamten) Vorform möglich ist,
- eine Rundumkühlung, vorzugsweise eine 360°-Kühlung der Glasbehältermündung durch eine axiale Kühlstömung zu erreichen, was eine möglichst spannungsarme - im Idealfall spannungsfreie - Abkühlung des Glasbehälters im Mündungsbereich ermöglicht, wodurch etwaige Qualitätsprobleme des erzeugten Behälterglases verhindert oder zumindest doch gemindert werden, und
- eine Entlüftung und auch Kühlung, auch des inneren Mündungsbereiches des Glasbehälters (in Vorform) infolge Injektorwirkung eines vorbeiströmenden Kühlmediums zu erzwingen.

Mit Hilfe der vorliegenden Erfindung kann der Wärmeentzug an der Mündung des Glasbehälters zum einen gleichmäßig, d.h. spannungsarm, im Idealfall spannungsfrei erfolgen und zum anderen ist es so möglich, die Mündung rascher, ja viel rascher, als die Vorform und ohne übermäßigen Wärmeentzug an der gesamten Vorform, insbesondere nicht in ihrem jeweiligen oberen Teil, zu kühlen und so eine wesentlich höhere Produktionsrate von Glasbehältern zu erzielen, da der jeweilige Glasbehälter bei rascherer Kühlung seiner Mündung schneller zur Fertigform verbracht werden kann. Auf diese Weise ist eine Steigerung der Produktionsrate von 3 - 8 % zu erzielen, was zu einer ebenso verbesserten Maschinennutzung bei annähernd gleichem Kapitaleinsatz und so zu entsprechenden Kosteneinsparungen führt.

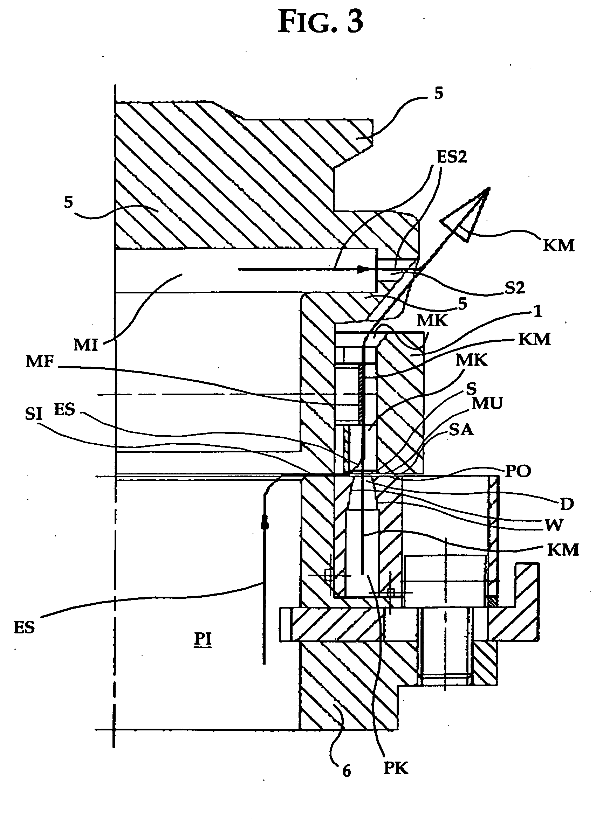

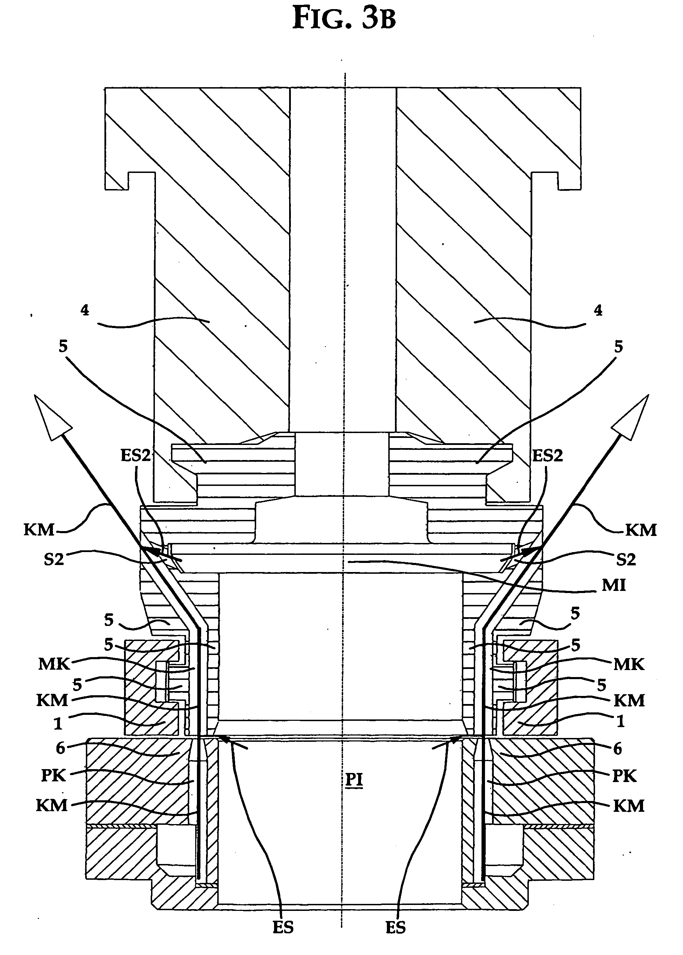

Nach derzeitiger Kenntnis werden dabei mit der vorliegenden Erfindung die besten Ergebnisse mittels der Ausführungsform erzielt, wie sie im weiteren in Fig. 3b dargestellt ist, also einer Ausführungsform, bei der ein Kühlmedium durch einen Kanal im Mündungswerkzeug strömt und zwar mit einem weiteren Entlüftungsstrom zur Entlüftung des Mündungsinnenbereiches.

Bei einer Durchführung des Kühlmedienkanals durch das Mündungswerkzeug selbst kann eine hohe Oberfläche, vorzugsweise von etwa 22000 mm² pro Mündung, zur Kühlung zur Verfügung gestellt werden. Auch ist hierbei die Kühlung effektiver als im Falle einer Durchführung des Kanals durch den Mündungsträger, da der Wärmeübergang dabei nicht durch unnötige Grenzflächen gestört wird.

So konnte mit dieser besonders bevorzugten Ausführungsform bei einer Einstellung von 160° (Anmerkung: Hier handelt es sich um eine Zeitangabe und zwar die Angabe einer relativen Zeit, die abhängig von der Dauer eines Maschinenzyklus von 360° ist. 160° entsprechen somit 160°/360°, mithin also 4/9-tel der Zeit, die für einen vollständigen Maschinenzyklus benötigt wird!) und 3 bar Druck für die als Kühlmedium verwendete Kühlluft die Mündungstemperatur um 30 - 35 °C gesenkt werden, wobei die Vorformkühlung dabei unabhängig von der Mündungkühlung betrieben wurde und nur zur Kühlung der Vorform diente. Bleibt die Mündungskühlung hingegen noch eingeschaltet, wenn die Vorform geöffnet ist, so beeinflußt sie auch die Vorform-Temperatur. Will man dies vermeiden, so ist die Mündungskühlung vor oder spätestens beim Öffnen der Vorform abzuschalten und erst wieder nach oder frühestens beim Schließen der Vorform einzuschalten.

Nach der vorliegenden Erfindung kann auch mit höheren Drücken, etwa bis 4 bar für die Mündungskühlung gearbeitet werden. Wird der Druck der Kühlluft hingegen auf 2 bar reduziert, so ist gegenüber einem Druck von 3 bar ein deutlicher Temperaturanstieg an der Mündung erkennbar. Will man dennoch mit geringerem Druck, - also etwa 2 bar oder 1,5 bar oder auch 1,0 oder sogar nur 0,5 bar -, eine höhere Kühlleistung erzielen, so kann dies vermittels größerer Querschnitte der Kühllmedienkanäle und/oder größerer Querschnitte der Zuführleitungen für das Kühlmedium erreicht werden.

Die separate Quelle für das Kühlmedium zur Mündungskühlung kann erfindungsgemäß vorzugsweise in allen vorgenannten Druckbereichen oder bei allen vorgenannten Drücken (etwa geregelt oder auch gesteuert) betrieben werden.

Ein weiterer Vorteil der erfindungsgemäßen Vorrichtung liegt auch in dem Umstand, daß durch die Führung des Kühlmediums durch zumindest einen Kanal im Pegelzylinderdeckel ein Selbstreinigungseffekt infolge des so ständig erfolgenden Freiblasens von Verunreinigungen erzielt wird, der mit zur Fehlerunanfälligkeit der erfindungsgemäßen Vorrichtung beizutragen vermag.

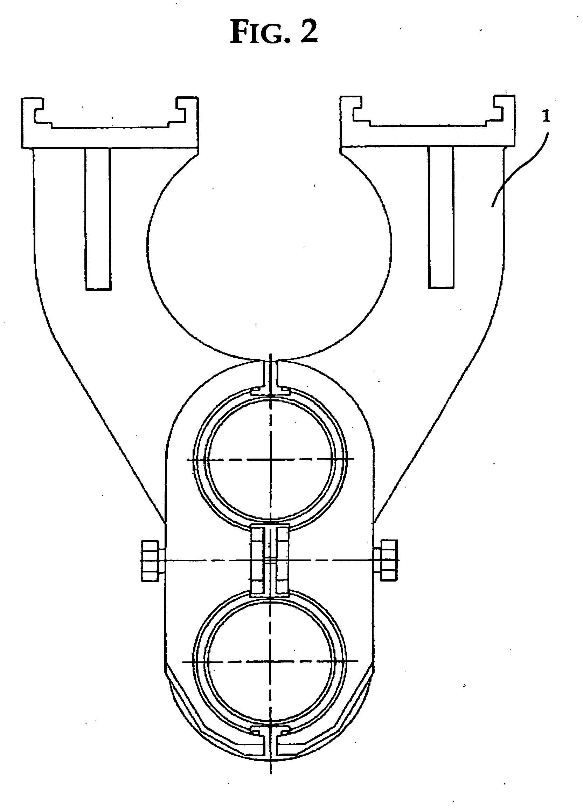

Im folgenden werden in Fig. 1 und 2 jeweils ein Beispiel aus dem Stand der Technik und darüber hinaus in den nachfolgenden Figuren nicht einschränkend zu verstehende Ausführungsbeispiele der vorliegenden Erfindung anhand der Zeichnung besprochen. In dieser zeigt:
- Fig. **1**: einen Querschnitt durch eine Glasmaschine nach dem Stand der Technik in dem hier relevanten Bereich von der Seite her mit Vorform, Mündungswerkzeug, Mündungsträger, Pegelzylinderdeckel, Kühldüse für Vorform und Kühldüse für die Mündung mit einem Kühlluftstrom,
- Fig. **2**: eine Aufsicht auf einen Mündungsträger nach dem Stand der Technik in einer Aufsicht von unten her, und zwar in der mit der Fertigform korrespondierenden (End-)Position des Mündungsträgers, bzw. von oben her, und zwar in der mit der Vorform korrespondierenden (End)-Position,
- Fig. **3**: einen Querschnitt durch eine Glasmaschine in einer Ausführungsform nach der vorliegenden Erfindung von der Seite her in dem hier relevanten Bereich mit Mündungsbereich, Mündungswerkzeug, Mündungsträger und Pegelzylinderdeckel, bei der ein Kühlmedium durch einen Kanal im Mündungsträger strömt,
- Fig.**3a**: eine Detailvergrößerung eines Teils der Darstellung nach Fig. **3**, welche den Schlitz oder Spalt zwischen Oberkante des Pegelzylinderdeckels und Unterkante des Mündungsträgers wie auch den hierdurch fließenden Entlüftungsstrom näher zeigt,
- Fig. **3b**: einen Querschnitt durch eine Glasmaschine in einer weiteren Ausführungsform nach der vorliegenden Erfindung von der Seite her in dem hier relevanten Bereich mit Mündungsbereich, Mündungswerkzeug, Mündungsträger und Pegelzylinderdeckel, bei der ein Kühlmedium durch einen Kanal im Mündungswerkzeug strömt und zwar mit einem weiteren Entlüftungsstrom zur Entlüftung des Mündungsinnenbereiches,
- Fig. **3c**: zeigt einen Querschnitt durch eine Glasmaschine in der Ausführungsform nach Fig. **3b** von der Seite her in dem hier relevanten Bereich mit Mündungsbereich, Mündungswerkzeug, Mündungsträger und Pegelzylinderdeckel, bei der ein Kühlmedium durch einen Kanal im Mündungswerkzeug strömt, hier jedoch ohne zusätzliche Entlüftung des Mündungsinnenbereiches,
- Fig. **4**: eine Ausführungsform eines Mündungsträgers nach der vorliegenden Erfindung in einer Aufsicht von unten her, und zwar in der mit der Fertigform korrespondierenden (End-)Position des Mündungsträgers, bzw. von oben her, und zwar in der mit der Vorform korrespondierenden (End)-Position,
- Fig. **5**: eine Aufsicht von oben her auf einen Pegelzylinderdeckel nach der vorliegenden Erfindung, mit Düsenöffnungen von Kanälen für ein Kühlmedium, hier Löchern, die ebenfalls kreisförmig regelmäßig angeordnet sind, und
- Fig. **6**: einen Querschnitt durch einen Pegelzylinderdeckel nach der vorliegenden Erfindung von der Seite her, mit Kanälen für ein Kühlmedium, hier Löchern, und einer balligen Düse am Austritt des jeweiligen Kanals.

Fig. **1** zeigt einen Querschnitt durch eine Glasmaschine nach dem Stand der Technik in dem hier relevanten Bereich von der Seite her mit Vorform **4,** Mündungswerkzeug **5,** Mündungsträger **1,** Pegelzylinderdeckel **6,** Vorform-Kühldüse **2** und Mündungs-Kühldüse **3** mit einem Kühlluftstrom **KM.**

Fig. **2** zeigt eine Aufsicht auf einen Mündungsträger **1** nach dem Stand der Technik in einer Aufsicht von unten her - in der mit der Fertigform korrespondierenden (End-)Position des Mündungsträgers - bzw. von oben her - und zwar in der mit der Vorform korrespondierenden (End)-Position -.

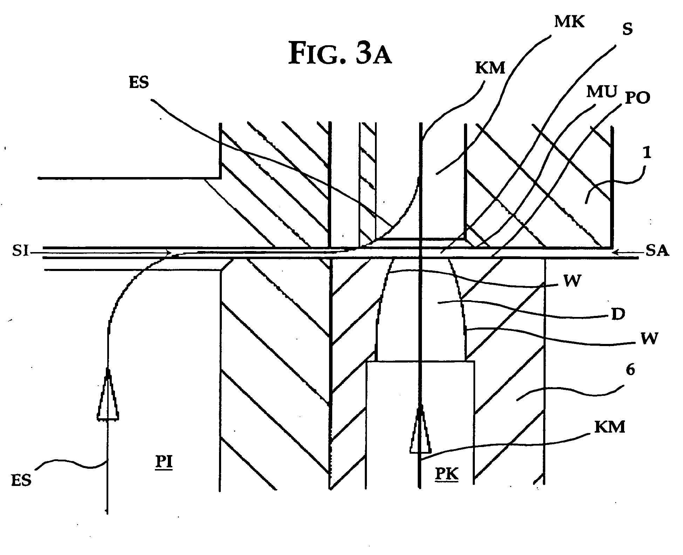

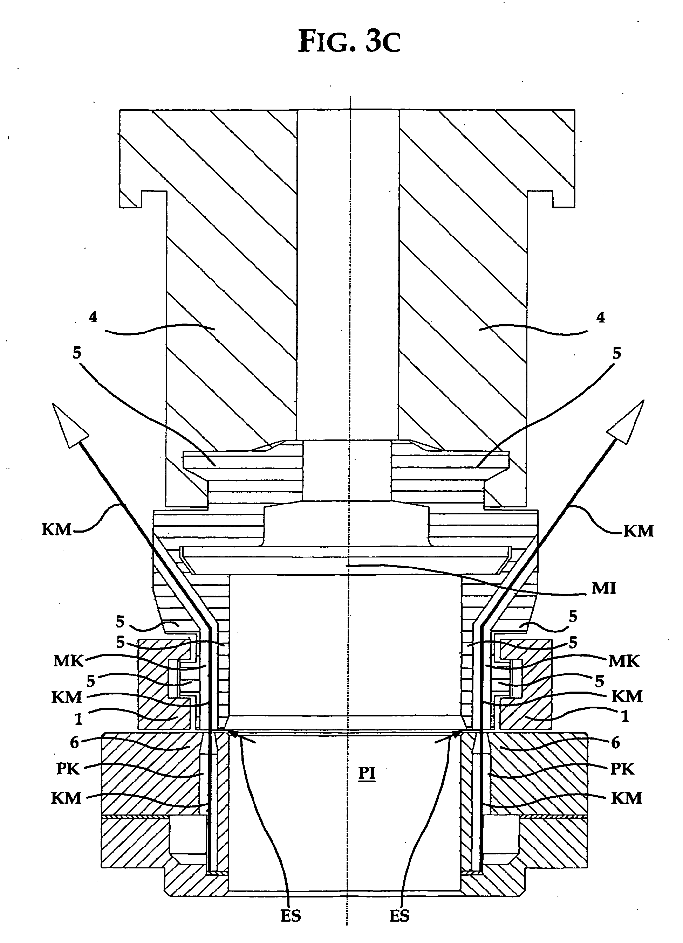

Fig. **3** zeigt einen Querschnitt durch eine Glasmaschine in einer Ausführungsform nach der vorliegenden Erfindung von der Seite her in dem hier relevanten Bereich mit Mündungsbereich, Mündungswerkzeug **5,** Mündungsträger **1** und Pegelzylinderdeckel **6** in Detaildarstellung, bei der ein Kühlmedium **KM** durch einen Kanal **MK** im Mündungsträger **1** strömt.

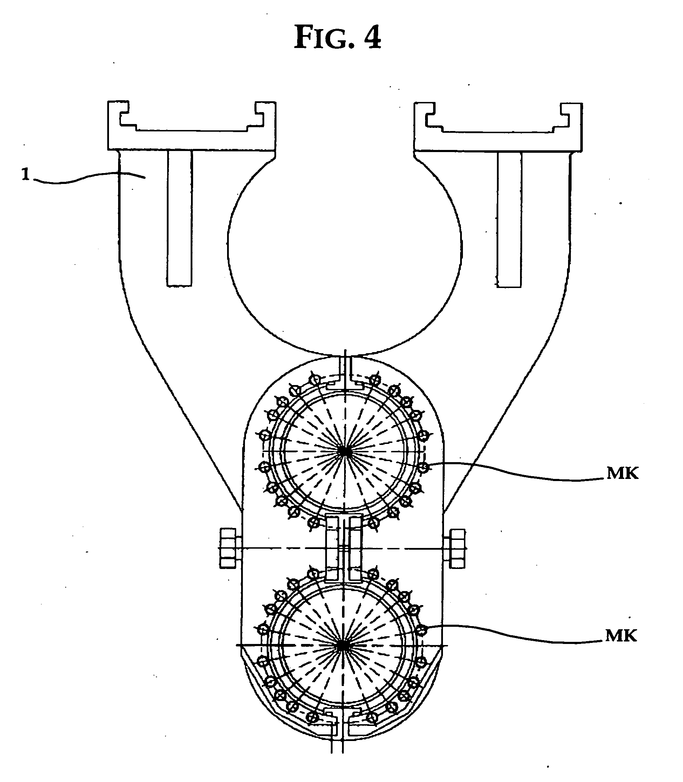

Hier gelangt ein Kühlmedium **KM** etwa Kühlluft, bevorzugterweise aus einer - der für die Vorform zu verwendenden Quelle gegenüber separaten Quelle - über, bevorzugterweise kreisförmig in regelmäßigen Bogenabständen angeordnete (vgl. auch Fig. **5****)** Kanäle **PK,** besonders bevorzugterweise vierundzwanzig Löcher **PK** in den Pegelzylinderdeckel **6.** Von dort wird die Kühlluft **KM** wiederum über, ebenfalls bevorzugterweise kreisförmig in regelmäßigen Bogenabständen angeordneten Kanäle **MK** (vgl. auch Fig. **4****),** abermals besonders bevorzugterweise vierundzwanzig Löcher pro Mündung, durch den Mündungsträger **1** geführt, wobei Eintrittsöffnungen der Durchleitungskanäle **MK** im Mündungsträger oberhalb von Austrittsöffnungen von Kanälen **PK** im Pegelzylinder angeordnet sind, wenn sich der Mündungsträger in der mit der Vorform korrespondierenden Betriebsstellung befindet. Die Kanäle **PK** im Pegelzylinderdeckel sind vermittels eines verkleinerten Austrittsquerschnitts - hier im Wege einer mit balliger Innenwand **W** ausgeführten Düse **D -** so gestaltet, daß hier eine - vorzugsweise besonders starke - Geschwindigkeitserhöhung des Kühlmediumstromes **KM** am Austritt des Kanals **PK** an der Oberkante **PO** des Pegelzylinderdeckels **6** stattfindet. Infolge dessen und des Schlitzes oder Spaltes **S** zwischen der Oberkante **PO** vom Pegelzylinderdeckel **6** und der Unterkante **MU** des Mündungsträgers **1** bildet sich ein Unterdruck im Pegelzylinderdeckel-Innenbereich **PI** und es fließt ein Entlüftungsstrom **ES** (eine erste Endüftung) durch den innen liegenden Bereich **SI** des Schlitzes (oder auch Spaltes) **S** zu dem aus der Düse **D** schnell austretenden Kühlmediumstrom **KM** hin.

Die durch die ballige Innenwandung **W** der Düse am Austritt des Kanals **PK** erzielte besonders hohe Geschwindigkeit des Volumenstromes **KM,** der hier auch den Entlüftungsstrom **ES** durch den Schlitz- oder Spaltbereich **SI** ansaugt, führt dazu, daß der so gebildete gesamte Volumenstrom **KM** beinahe ausschließlich nach oben in den Kanal **MK** geblasen wird - der durch den Mündungsträger **1** hindurchführt - und nicht durch den, nach außen liegenden weiteren Bereich **SA** des Schlitzes oder Spaltes **S** ins Freie hindurch tritt.

Dieser Volumenstrom **KM** strömt dann weiter axial durch den Kanal **MK** hindurch, wobei eine etwaig dort jeweils befindliche Mündungsträgerfeder **MF** gleich mitgekühlt wird, was zugleich einem vorzeitigen Ausglühen der dortigen Mündungsträgerfeder **MF** entgegengewirkt. Die Mündungsträgerfeder **MF** dient der Zentrierung des Mündungswerkzeuges **5** im Mündungsträger **1,** was zu einer Dezentrierung bei einseitigem Verschleiß infolge Ausglühens der Feder **MF** und somit zu Qualitätsproblemen, etwa Rissen im Glasbehälter führen kann. Dem wird durch die hier zu sehende Ausführungsform der vorliegenden Erfindung zugleich entgegengewirkt. Der zuvor erwähnte Volumenstrom **KM** führt sodann außen am Mündungsbereich und damit auch am Mündungswerkzeug **5** vorbei und erzeugt hier nochmals einen Unterdruck im Mündungsinnenbereich **MI** vermöge der dortigen Öffnungen, vorzugsweise Entlüftungsbohrungen **S2** und des bereits zuvor für die erste Entlüftung verwendeten Venturi-Prinzips. Diese zusätzliche Entlüftung (zweite Entlüftung) sorgt somit über den weiteren Entlüftungsstrom **ES2** auch in diesem Bereich des Mündungswerkzeuges 5 (vorzugsweise dem Deckringbereich, Deckring hier nicht dargestellt) für eine Zwangsentlüftung und verbessert so die vorliegende Erfindung nochmals. Anzumerken ist hier, daß die Vorbeiführung des Kühlmedienstromes **KM** von außen am Mündungsbereich oder Mündungswerkzeug **5** vorbei, - wie bereits oben im allgemeinen Teil beschrieben - erfindungsgemäß selbstverständlich auch unabhängig von der Durchleitung des Kühlmediums **KM** durch jeweils einen weiteren Kanal oder ein weiteres Loch, wie hier etwa durch einen Kanal **MK** im Mündungsträger 1 oder gegebenenfalls auch im Mündungswerkzeug **5** selbst - erfolgen kann.

Fig. **3a** zeigt eine Detailvergrößerung eines Teils der Darstellung nach Fig. **3****,** nämlich den Schlitz oder Spalt **S** zwischen Oberkante **PO** des Pegelzylinderdeckels **6** und Unterkante **MU** des Mündungsträgers **1** wie auch den hierdurch fließenden Entlüftungsstrom **ES** näher. Die weiter aufgeführten Bezugszeichen entsprechen der bereits aus Fig. **3** bekannten Bedeutung.

Fig. **3b** zeigt einen Querschnitt durch eine Glasmaschine in einer weiteren Ausführungsform nach der vorliegenden Erfindung von der Seite her in dem hier relevanten Bereich mit Mündungsbereich, Mündungswerkzeug **5,** Mündungsträger **1** und Pegelzylinderdeckel **6,** bei der ein Kühlmedium **KM** durch einen Kanal **MK** im Mündungswerkzeug **5** strömt und zwar mit weiterem Entlüftungsstrom **ES2** zur Entlüftung des Mündungsinnenbereiches **MI.**

Auch hier gelangt ein Kühlmedium **KM,** etwa Kühlluft bevorzugterweise aus einer - der für die Vorform zu verwendenden Quelle gegenüber separaten Quelle - über, bevorzugterweise kreisförmig in regelmäßigen Bogenabständen angeordnete (vgl. auch Fig. **5****)** Kanäle **PK,** besonders bevorzugterweise vierundzwanzig Löcher **PK** in den Pegelzylinderdeckel **6.** Von dort wird die Kühlluft **KM** wiederum über, ebenfalls bevorzugterweise kreisförmig in regelmäßigen Bogenabständen angeordneten Kanäle **MK,** abermals besonders bevorzugterweise vierundzwanzig Löcher pro Mündung, hier nun durch das Mündungswerkzeug **5** statt durch den Mündungsträger **1** geführt, wobei Eintrittsöffnungen der Durchleitungskanäle **MK** hier jedoch im Mündungswerkzeug **5** und nicht im Mündungsträger **1** oberhalb von Austrittsöffnungen von Kanälen **PK** im Pegelzylinder angeordnet sind. Die Kanäle **PK** im Pegelzylinderdeckel sind vermittels eines verkleinerten Austrittsquerschnitts - auch hier im Wege einer Düse - so gestaltet, daß hier eine - vorzugsweise besonders starke - Geschwindigkeitserhöhung des Kühlmediumstromes **KM** am Austritt des Kanals **PK** an der Oberkante des Pegelzylinderdeckels **6** stattfindet. Infolge dessen und eines Schlitzes oder Spaltes zwischen der Oberkante des Pegelzylinderdeckels **6** und der Unterkante des Mündungswerkzeugs **5** und/oder der Unterkante des Mündungsträgers **1** bildet sich ein Unterdruck im Pegelzylinderdeckel-Innenbereich **PI** und es fließt ein Entlüftungsstrom **ES** (eine erste Entlüftung) durch den innen liegenden Bereich des Schlitzes (oder auch Spaltes) zu dem aus der Düse schnell austretenden Kühlmediumstrom **KM** hin. Die durch die Düse am Austritt des Kanals **PK** erzielte besonders hohe Geschwindigkeit des Volumenstromes **KM,** der hier auch den Entlüftungsstrom **ES** durch den Schlitz- oder Spaltbereich ansaugt, führt dazu, daß der so gebildete gesamte Volumenstrom **KM** beinahe ausschließlich nach oben in den Kanal **MK** geblasen wird - der hier in dieser Ausführungsform nach der vorliegenden Erfindung durch das Mündungswerkzeug **5** statt durch den Mündungsträger **1** hindurchführt - und nicht durch den, nach außen liegenden weiteren Bereich des Schlitzes oder Spaltes ins Freie hindurch tritt.

Dieser Volumenstrom **KM** strömt dann weiter axial durch den Kanal **MK,** nämlich eine Bohrung oder anderweitige Kanalausgestaltung im Mündungswerkzeug **5** hindurch. Der zuvor erwähnte Volumenstrom **KM** führt sodann außen am Mündungsbereich vorbei und erzeugt hier nochmals einen Unterdruck im Mündungsinnenbereich **MI** vermöge der dortigen Öffnungen, vorzugsweise Entlüftungsbohrungen **S2** und vorzugsweise unter Ausnutzung des bereits zuvor für die erste Entlüftung ebenfalls genutzten Venturi-Prinzips. Diese zusätzliche Entlüftung (zweite Entlüftung) sorgt somit über den weiteren Entlüftungsstrom **ES2** auch in diesem Bereich des Mündungswerkzeuges **5** (vorzugsweise dem Deckringbereich, Deckring hier nicht dargestellt) für eine Zwangsentlüftung und verbessert so die vorliegende Erfindung nochmals. Anzumerken ist hier, daß die Vorbeiführung des Kühlmedienstromes **KM** von außen am Mündungsbereich vorbei, - wie bereits oben im allgemeinen Teil beschrieben - erfindungsgemäß selbstverständlich auch unabhängig von der Durchleitung des Kühlmediums **KM** durch jeweils einen weiteren Kanal oder ein weiteres Loch, wie hier etwa durch einen Kanal **MK** im Mündungswerkzeug **5** erfolgen kann.

Fig. **3c** zeigt einen Querschnitt durch eine Glasmaschine in der Ausführungsform nach Fig. **3b** auch hier von der Seite her in dem hier relevanten Bereich mit Mündungsbereich, Mündungswerkzeug **5,** Mündungsträger **1** und Pegelzylinderdeckel **6,** bei der ein Kühlmedium **KM** durch einen Kanal **MK** im Mündungswerkzeug **5** strömt, hier jedoch ohne zusätzliche Entlüftung des Mündungsinnenbereiches **MI** durch einen weiteren Entlüftungsstrom vermittels einer Öffnung im Mündungsbereich. Die weiter aufgeführten Bezugszeichen entsprechen hier der bereits aus Fig. **3b** bzw. Fig. **3** bekannten Bedeutung.

Fig. **4** zeigt eine Ausführungsform eines Mündungsträgers **1** nach der vorliegenden Erfindung in einer Aufsicht von unten her - in der mit der Fertigform korrespondierenden (End-)Position des Mündungsträgers **1 -** bzw. von oben her - in der mit der Vorform korrespondierenden (End)-Position -, und zwar mit oberen Austrittsöffnungen - "obere" Austrittsöffnungen gesehen in der mit der Vorform korrespondierenden (End)-Position des Mündungsträgers **1** - von Kanälen **MK** des Mündungsträgers **1** für ein Kühlmedium, - hier Löchern -, die kreisförmig regelmäßig - von der Ausnahme der Lücke in der 12 Uhr- und 6 Uhr-Position abgesehen - hier in gleichen Bogenabständen angeordnet sind.

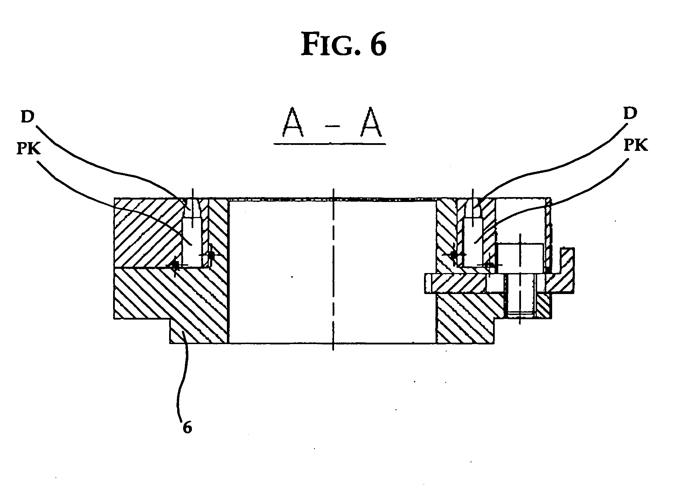

Fig. **5** zeigt eine Aufsicht von oben her auf einen Pegelzylinderdeckel **6** nach der vorliegenden Erfindung, mit Düsenöffnungen von Kanälen **PK -** hier Löchern - für ein Kühlmedium, die ebenfalls kreisförmig regelmäßig angeordnet sind und vorzugsweise unter die unteren Eintrittsöffnungen der Kanäle des Mündungsträgers (Durchleitungskanal oder -kanäle **MK** aus Fig. **3****,** **3a****,** **4**) positioniert sind, dies bevorzugterweise jedenfalls dann, wenn sich der Mündungsträger in der mit der Vorform korrespondierenden Betriebsstellung befindet. Der hier angedeutete Schnitt entlang **A - A** ist sodann in seitlicher Darstellung Fig. **6** zu sehen.

Fig. **6** zeigt den Querschnitt **A- A** durch einen Pegelzylinderdeckel **6** nach Fig. **5** nach der vorliegenden Erfindung von der Seite her, mit Kanälen **PK** für ein Kühlmedium - hier Löchern -, die ebenfalls kreisförmig regelmäßig angeordnet sind (vgl. Fig. **5**) und einer mit balliger Innenwandung versehenen Düse **D** am Austritt des jeweiligen Kanals.

## Patentansprüche

1. Vorrichtung zur Mündungskühlung für eine Behälterglasmaschine zur Formung eines Glasbehälters aufweisend mindestens eine Vorform (**4**) und mindestens einen Pegelzylinder mit Pegelzylinderdeckel (**6**), wobei der Pegelzylinderdeckel (**6**) mindestens eine Zuleitung und mindestens einen Kanal (**PK**) mit einem Austritt aufweist, wodurch ein Kühlmedium (**KM**) für eine Mündungskühlung geführt wird, das wieder aus dem Kanal (**PK**) im Pegelzylinderdeckel (6) hinaus tritt und die eine von der Vorformkühlung unabhängige Einstellung von Druck und/oder Volumenstrom und/oder Temperatur des Kühlmediums (**KM**) für die Mündungskühlung erlaubt, um die Mündung des zu formenden Glasbehälters unabhängig von einer Kühlung der Vorform (**4**) zu kühlen.

2. Vorrichtung zur Mündungskühlung für eine Behälterglasmaschine nach Anspruch 1, **dadurch gekennzeichnet, daß** der Druck des Kühlmediums (**KM**) für die Mündungskühlung mit mindestens 0,5 bar eingestellt ist.

3. Vorrichtung zur Mündungskühlung für eine Behälterglasmaschine nach Anspruch 1 oder 2, **dadurch gekennzeichnet, daß** sie auch mindestens einen Mündungsträger (**1**) mit mindestens einem Kanal (**MK**) aufweist, durch den das Kühlmedium (**KM**) zur Kühlung der Mündung geführt wird.

4. Vorrichtung zur Mündungskühlung für eine Behälterglasmaschine nach Anspruch 3, **dadurch gekennzeichnet, daß** das Kühlmedium (**KM**), nachdem es aus dem Pegelzylinderdeckel (**6**) ausgetreten ist, durch den weiteren Kanal (**MK**) im Mündungsträger (**1**) geführt wird, und dann im weiteren von außen in Höhe des Mündungsbereiches des Glasbehälters vorbeigeleitet wird.

5. Vorrichtung zur Mündungskühlung für eine Behälterglasmaschine nach Anspruch 4, **dadurch gekennzeichnet, daß** die Behälterglasmaschine auch mindestens ein Mündungswerkzeug (**5**) aufweist und die Vorbeileitung des Kühlmediums (**KM**) von außen in Höhe des Mündungsbereiches des Glasbehälters **dadurch** erfolgt, daß es an dem Mündungswerkzeug (5) vorbeigeleitet wird.

6. Vorrichtung zur Mündungskühlung für eine Behälterglasmaschine nach Anspruch 4 oder 5, **dadurch gekennzeichnet, daß** die Behälterglasmaschine auch mindestens eine Mündungsträgerfeder (**MF**) aufweist, die der Zentrierung des Mündungswerkzeuges (**5**) im Mündungsträger (**1**) dient und die im Kanal (**MK**) im Mündungsträger (**1**) befindlich ist.

7. Vorrichtung zur Mündungskühlung für eine Behälterglasmaschine nach einem der Ansprüche 1 bis 6, **dadurch gekennzeichnet, daß** sie auch mindestens ein Mündungswerkzeug (5) mit mindestens einem Kanal (**MK**) aufweist, durch den das Kühlmedium (**KM**) zur Kühlung der Mündung geführt wird.

8. Vorrichtung zur Mündungskühlung für eine Behälterglasmaschine nach Anspruch 7, **dadurch gekennzeichnet, daß** das Kühlmedium (**KM**), nachdem es aus dem Pegelzylinderdeckel (**6**) ausgetreten ist, durch den weiteren Kanal (**MK**) im Mündungswerzeug (**5**) geführt wird, und dann im weiteren von außen in Höhe des Mündungsbereiches des Glasbehälters vorbeigeleitet wird.

9. Vorrichtung zur Mündungskühlung für eine Behälterglasmaschine nach einem der Ansprüche 3 bis 8, **dadurch gekennzeichnet, daß** mindestens ein Austritt mindestens eines Kanals (**MK**) im Mündungsträger (**1**) oder im Mündungswerkzeug (**5**) so ausgestaltet ist, daß dort eine Erhöhung der Strömungsgeschwindigkeit des Kühlmediums (**KM**) erzeugt wird.

10. Vorrichtung zur Mündungskühlung für eine Behälterglasmaschine nach einem der Ansprüche 1 bis 9, **dadurch gekennzeichnet, daß** mindestens ein Austritt mindestens eines Kanals (**PK**) im Pegelzylinderdeckel (**6**) an der Oberkante (**PO**) des Pegelzylinderdeckels (**6**) angeordnet ist.

11. Vorrichtung zur Mündungskühlung für eine Behälterglasmaschine nach Anspruch 10, **dadurch gekennzeichnet, daß** mehrere Austritte von Kanälen (**PK**) im Pegelzylinderdeckel (**6**) an der Oberkante (**PO**) des Pegelzylinderdeckels (**6**) ringsum, vorzugsweise gleichmäßig bogenförmig über einen Kreisumfang in Pegelzylinderaufsicht gesehen, verteilt angeordnet sind.

12. Vorrichtung zur Mündungskühlung für eine Behälterglasmaschine nach einem der Ansprüche 1 bis 11, **dadurch gekennzeichnet, daß** mindestens ein Austritt mindestens eines Kanals (**PK**) im Pegelzylinderdeckel (**6**) so ausgestaltet ist, daß dort eine Erhöhung der Strömungsgeschwindigkeit des Kühlmediums (**KM**) erzeugt wird.

13. Vorrichtung zur Mündungskühlung für eine Bchälterglasmaschine nach einem der Ansprüche 3 bis 12, **dadurch gekennzeichnet, daß** der Austritt des jeweiligen Kanals (**PK**) im Pegelzylinderdeckel (**6**) unterhalb eines Eintritts des jeweiligen Kanals (**ME**) im Mündungsträger (**1**) oder Mündungswerkzeug (**5**) angeordnet ist, wenn sich der Mündungsträger (**1**) oder das Mündungswerkzeug (**5**) in der mit der Vorform (**4**) korrespondierenden Betriebsstellung befindet oder befinden.

14. Vorrichtung zur Mündungskühlung für eine Behälterglasmaschine nach Anspruch 13 soweit dieser auf Anspruch 12 rückbezogen ist, **dadurch gekennzeichnet, daß** zwischen der Oberkante (**PO**) des Pegelzylinderdeckels (**6**) und der Unterkante (**MU**) des Mündungsträgers (**1**) oder des Mündungswerkzeuges (**5**) ein Schlitz oder Spalt (**S**) gebildet wird, wenn sich der Mündungsträger (**1**) oder das Mündungswerkzeug (**5**) in der mit der Vorform (**4**) korrespondierenden Betriebsstellung befindet oder befinden, wodurch infolge der Stömungsgeschwindigkeitserhöhung des Kühlmediums (**KM**) am Austritt des jeweiligen Kanals (**PK**) im Pegelzylinderdekkel (**6**) ein Unterdruck erzeugt wird und hierdurch eine Entlüftung (**ES**) im Pegelzylinderdekkel-Innenbereich (**PI**) durch den Schlitz oder Spalt (**S**) stattfindet.

15. Vorrichtung zur Mündungskühlung für eine Behälterglasmaschine nach einem der Ansprüche 4 oder 5 bis 14, soweit diese auf Anspruch 4 oder 8 rückbezogen sind, **dadurch gekennzeichnet, daß** zwischen der Oberkante des Mündungsträgers (**1**) und der Unterkante der Vorform (**4**) eine Öffnung (**S2**) zum Mündungsinnenbereich (**MI**) hin vorgesehen ist, wodurch infolge der Strömungsgeschwindigkeit des Kühlmediums (**KM**) am Austritt des jeweiligen Kanals (**MK**) im Mündungsträger (**1**) oder im Mündungswerkzeug (**5**) ein Unterdruck erzeugt wird und hierdurch eine Entlüftung (**ES2**) im Mündungsinnenbereich (**MI**) durch die Öffnung (**S2**) stattfindet.

## Claims

1. Finish cooling apparatus for a container glass machine for shaping a glass container, having at least one primary mould (**4**) and at least one plunger cylinder with a plunger cylinder cover (**6**), the plunger cylinder cover (**6**) having at least one feed line and at least one channel (**PK**) with an outlet through which a cooling medium (**KM**) for finish cooling is guided, which exits again out of the channel (**PK**) in the plunger cylinder cover (**6**), and that permits the pressure and/or volumetric flow and/or temperature of the cooling medium (**KM**) for finish cooling to be set independently of the cooling of the primary mould, in order to cool the finish of the glass container to be shaped independently of the cooling of the primary mould (**4**).

2. Finish cooling apparatus for a container glass machine according to Claim 1, **characterized in that** the pressure of the cooling medium (**KM**) for finish cooling is set to at least 0.5 bar.

3. Finish cooling apparatus for a container glass machine according to Claim 1 or 2, **characterized in that** the apparatus also has at least one finish support (**1**) with at least one channel (**MK**) through which the cooling medium (**KM**) for finish cooling is guided.

4. Finish cooling apparatus for a container glass machine according to Claim 3, **characterized in that**, after it has exited from the plunger cylinder cover (**6**), the cooling medium (**KM**) is guided through the further channel (**MK**) in the finish support (**1**) and is then further led past from outside at the level of the finish region of the glass container.

5. Finish cooling apparatus for a container glass machine according to Claim 4, **characterized in that** the container glass machine also has at least one finish mould (**5**), and the cooling medium (**KM**) is led past from outside at the level of the finish region of the glass container by being led past the finish mould (**5**).

6. Finish cooling apparatus for a container glass machine according to Claim 4 or 5, **characterized in that** the container glass machine also has at least one finish support spring (**MF**) that serves for centering the finish mould (**5**) in the finish support (**1**) and is located in the channel **(MK)** in the finish support (**1**).

7. Finish cooling apparatus for a container glass machine according to one of Claims 1 to 6, **characterized in that** it also has at least one finish mould (**5**) with at least one channel (**MK**) through which the cooling medium (**KM**) for finish cooling is guided.

8. Finish cooling apparatus for a container glass machine according to Claim 7, **characterized in that**, after it has exited from the plunger cylinder cover (**6**), the cooling medium (**KM**) is guided through the further channel (**MK**) in the finish mould (**5**) and is then further led past from outside at the level of the finish region of the glass container.

9. Finish cooling apparatus for a container glass machine according to one of Claims 3 to 8, **characterized in that** at least one outlet of at least one channel (**MK**) in the finish support (**1**) or in the finish mould (**5**) is configured such that the flow rate of the cooling medium (**KM**) is increased therein.

10. Finish cooling apparatus for a container glass machine according to one of Claims 1 to 9, **characterized in that** at least one outlet of at least one channel (**PK**) in the plunger cylinder cover (**6**) is arranged at the upper edge (**PO**) of the plunger cylinder cover (**6**).

11. Finish cooling apparatus for a container glass machine according to Claim 10, **characterized in that** a number of outlets of channels (**PK**) in the plunger cylinder cover (**6**) at the upper edge (**PO**) of the plunger cylinder cover (**6**) are arranged distributed all around, preferably in a uniformly arcuate fashion over a circular circumference in plan view of the plunger cylinder.

12. Finish cooling apparatus for a container glass machine according to one of Claims 1 to 11, **characterized in that** at least one outlet from at least one channel (**PK**) in the plunger cylinder cover (**6**) is configured such that the flow rate of the cooling medium (**KM**) is increased therein.

13. Finish cooling apparatus for a container glass machine according to one of Claims 3 to 12, **characterized in that** the outlet of each channel (PK) in the plunger cylinder cover (**6**) is arranged below an inlet of the respective channel (**MK**) in the finish support (**1**) or finish mould (**5**) when the finish support (**1**) or the finish mould (**5**) is or are located in the operating position corresponding to the primary mould (**4**).

14. Finish cooling apparatus for a container glass machine according to Claim 13, to the extent that the latter refers back to Claim 12, **characterized in that** a slot or gap (**S**) is formed between the upper edge (**PO**) of the plunger cylinder cover (**6**) and the lower edge (**MU**) of the finish support (**1**) or of the finish mould (**5**) when the finish support (**1**) or the finish mould (**5**) is or are located in the operating position corresponding to the primary mould (**4**), the result being that a reduced pressure is generated as a consequence of the increase in the flow rate of the cooling medium (**KM**) at the outlet of each channel (**PK**) in the plunger cylinder cover (**6**), and venting (**ES**) in the plunger cylinder cover interior (**PI**) thereby takes place through the slot or gap (**S**).

15. Finish cooling apparatus for a container glass machine according to one of Claims 4 or 5 to 14, to the extent that the latter refer back to Claim 4 or 8, **characterized in that** an opening (**S2**) to the finish interior (**MI**) is provided between the upper edge of the finish support (**1**) and the lower edge of the primary mould (**4**), the result being that negative pressure is generated as a consequence of the increase in the flow rate of the cooling medium (**KM**) at the outlet of each channel (**MK**) in the finish support (**1**) or in the finish mould (**5**), and venting (**ES2**) in the finish interior (**MI**) thereby takes place through the opening (**S2**).

## Revendications

1. Dispositif de refroidissement de l'embouchure pour une machine pour récipients en verre destinée à former un récipient en verre, présentant au moins un moule primaire (4) et au moins un cylindre de mise à niveau doté d'un couvercle (6) de cylindre de mise à niveau, le couvercle (6) du cylindre de mise à niveau présentant au moins une amenée et au moins un canal (PK) doté d'une sortie par laquelle un fluide de refroidissement (KM) est amené pour refroidir l'embouchure et ressort du canal (PK) ménagé dans le couvercle (6) du cylindre de mise à niveau, et qui permet, indépendamment du refroidissement du moule primaire, de régler la pression et/ou le débit volumique et/ou la température du fluide de refroidissement (KM) pour le refroidissement de l'embouchure pour refroidir l'embouchure du récipient en verre à former indépendamment d'un refroidissement du moule primaire (4).

2. Dispositif de refroidissement de l'embouchure pour une machine pour récipients en verre selon la revendication 1, **caractérisé en ce que** la pression du fluide de refroidissement (KM) pour le refroidissement de l'embouchure est réglée à au moins 0,5 bar.

3. Dispositif de refroidissement de l'embouchure pour une machine pour récipients en verre selon les revendications 1 ou 2, **caractérisé en ce qu'**il présente également au moins un porte-embouchure (1) qui présente au moins un canal (MK) qui conduit le fluide de refroidissement (KM) pour le refroidissement de l'embouchure.

4. Dispositif de refroidissement de l'embouchure pour une machine pour récipients en verre selon la revendication 3, **caractérisé en ce qu'**après être sorti du couvercle (6) du cylindre de mise à niveau, le fluide de refroidissement (KM) est conduit dans l'autre canal (MK) ménagé dans le porte-embouchure (1) pour ensuite être conduit depuis l'extérieur pour passer devant le récipient en verre à la hauteur de sa région d'embouchure.

5. Dispositif de refroidissement de l'embouchure pour une machine pour récipients en verre selon la revendication 4, **caractérisé en ce que** la machine pour récipients en verre présente également au moins un outil d'embouchure (5) et **en ce que** le guidage du fluide de refroidissement (KM) depuis l'extérieur pour passer devant le récipient en verre à la hauteur de sa région d'embouchure s'effectue en le faisant passer devant l'outil d'embouchure (5).

6. Dispositif de refroidissement de l'embouchure pour une machine pour récipients en verre selon les revendications 4 ou 5, **caractérisé en ce que** la machine pour récipients en verre présente également au moins un vérin (MF) de porte-embouchure qui sert à centrer l'outil d'embouchure (5) dans le porte-embouchure (1) et qui est situé dans le canal (MK) ménagé dans le porte-embouchure (1).

7. Dispositif de refroidissement de l'embouchure pour une machine pour récipients en verre selon l'une des revendications 1 à 6, **caractérisé en ce qu'**il présente également au moins un outil d'embouchure (5) qui présente au moins un canal (MK) qui conduit le fluide de refroidissement (KM) pour le refroidissement de l'embouchure.

8. Dispositif de refroidissement de l'embouchure pour une machine pour récipients en verre selon la revendication 7, **caractérisé en ce qu'**après avoir quitté le couvercle (6) du cylindre de mise à niveau, le fluide de refroidissement (KM) est conduit à travers l'autre canal (MK) ménagé dans l'outil d'embouchure (5) pour ensuite être conduit depuis l'extérieur pour passer devant le récipient en verre à la hauteur de sa région d'embouchure.

9. Dispositif de refroidissement de l'embouchure pour une machine pour récipients en verre selon l'une des revendications 3 à 8, **caractérisé en ce qu'**au moins une sortie d'au moins un canal (MK) ménagé dans le porte-embouchure (1) ou dans l'outil d'embouchure (5) est configurée de manière à ce qu'il s'y produise une augmentation de la vitesse d'écoulement du fluide de refroidissement (KM).

10. Dispositif de refroidissement de l'embouchure pour une machine pour récipients en verre selon l'une des revendications 1 à 9, **caractérisé en ce qu'**au moins une sortie d'au moins un canal (PK) ménagé dans le couvercle (6) du cylindre de mise à niveau est disposée sur le bord supérieur (PO) du couvercle (6) du cylindre de mise à niveau.

11. Dispositif de refroidissement de l'embouchure pour une machine pour récipients en verre selon la revendication 10, **caractérisé en ce que** plusieurs sorties de canaux (PK) ménagés dans le couvercle (6) du cylindre de mise à niveau sont réparties périphériquement sur le bord supérieur (PO) du couvercle (6) du cylindre de mise à niveau, de préférence de manière régulière en arc de cercle sur la périphérie circulaire du cylindre de mise à niveau vu en plan.

12. Dispositif de refroidissement de l'embouchure pour une machine pour récipients en verre selon l'une des revendications 1 à 11, **caractérisé en ce qu'**au moins une sortie d'au moins un canal (PK) ménagé dans le couvercle (6) du cylindre de mise à niveau est configurée de manière à ce qu'il s'y produise une augmentation de la vitesse d'écoulement du fluide de refroidissement (KM).

13. Dispositif de refroidissement de l'embouchure pour une machine pour récipients en verre selon l'une des revendications 3 à 12, **caractérisé en ce que** la sortie de chaque canal (PK) ménagé dans le couvercle (6) du cylindre de mise à niveau est disposée en dessous d'une entrée du canal (MK) correspondant ménagé dans le porte-embouchure (1) ou dans l'outil d'embouchure (5) lorsque le porte-embouchure (1) ou l'outil d'embouchure (5) sont situés dans la position de travail qui correspond au moule primaire (4).

14. Dispositif de refroidissement de l'embouchure pour une machine pour récipients en verre selon la revendication 13 dans la mesure où celle-ci dépend de la revendication 12, **caractérisé en ce qu'**une fente ou un interstice (S) sont formés entre le bord supérieur (PO) du couvercle (6) du cylindre de mise à niveau et le bord inférieur (MU) du porte-embouchure (1) ou de l'outil d'embouchure (5) lorsque le porte-embouchure (1) ou l'outil d'embouchure (5) sont situés dans la position de travail qui correspond au moule primaire (4), de sorte que du fait de l'augmentation de la vitesse d'écoulement du fluide de refroidissement (KM) à la sortie de chaque canal (PK) ménagé dans le couvercle (6) du cylindre de mise à niveau, une dépression soit produite et entraîne une évacuation d'air (ES) de la partie intérieure (PI) du couvercle du cylindre de mise à niveau par la fente ou l'interstice (S).

15. Dispositif de refroidissement de l'embouchure pour une machine pour récipients en verre selon l'une des revendications 4 ou 5 à 14 dans la mesure où elles dépendent des revendications 4 ou 8, **caractérisé en ce qu'**une ouverture (S2) qui ouvre sur la région intérieure (MI) de l'embouchure est prévue entre le bord supérieur du porte-embouchure (1) et le bord inférieur du moule primaire (4), de sorte que du fait de la vitesse d'écoulement du fluide de refroidissement (KM) à la sortie de chaque canal (MK) ménagé dans le porte-embouchure (1) ou dans l'outil d'embouchure (5), une dépression soit produite et entraîne une évacuation de l'air (ES2) dans la région intérieure (MI) de l'embouchure, à travers l'ouverture (S2).
